(19) Europäisches Patentamt / European Patent Office / Office européen des brevets

(11) **EP 4 303 088 B1**

(12) **EUROPEAN PATENT SPECIFICATION**

(45) Date of publication and mention
of the grant of the patent:
**28.08.2024   Bulletin 2024/35**

(21) Application number: **22182891.6**

(22) Date of filing: **04.07.2022**

(51) International Patent Classification (IPC):
**B60T 17/22** *(2006.01)*    **B60T 8/172** *(2006.01)*
**B60T 8/18** *(2006.01)*    **B60T 8/32** *(2006.01)*
**G01G 19/08** *(2006.01)*

(52) Cooperative Patent Classification (CPC):
**B60T 17/228; B60T 8/1705; B60T 8/172;**
**B60T 8/1893; B60T 8/3235; B60T 8/3245;**
**B60T 13/665; B60W 40/068; B60W 40/13;**
**G01G 19/045;** B60T 2250/02; B60W 10/184;
B60W 2040/1307; B60W 2300/13; B60W 2510/085;

(Cont.)

(54) **CONTROLLER FOR ESTIMATING INDIVIDUAL AXLE WEIGHTS OF A RAIL VEHICLE, COMPUTER-IMPLEMENTED METHOD THEREFOR, COMPUTER PROGRAM AND NON-VOLATILE DATA CARRIER**

STEUERUNGSVERFAHREN ZUM SCHÄTZEN DER EINZELACHSGEWICHTE EINES SCHIENENFAHRZEUGS, COMPUTERIMPLEMENTIERTES VERFAHREN DAZU, COMPUTERPROGRAMM UND NICHTFLÜCHTIGER DATENTRÄGER

CONTRÔLEUR POUR ESTIMER LES POIDS INDIVIDUELS DES ESSIEUX D'UN VÉHICULE FERROVIAIRE, PROCÉDÉ MIS EN OEUVRE PAR ORDINATEUR CORRESPONDANT, PROGRAMME INFORMATIQUE ET SUPPORT DE DONNÉES NON VOLATILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024   Bulletin 2024/02**

(73) Proprietor: **Dellner Bubenzer AB**
**781 70 Borlänge (SE)**

(72) Inventors:
• **PRIM, Viktor**
  **811 61 SANDVIKEN (SE)**
• **LENNARTSSON, Svante**
  **791 46 FALUN (SE)**

(74) Representative: **Brann AB**
**P.O. Box 3690**
**Sveavägen 63**
**103 59 Stockholm (SE)**

(56) References cited:
WO-A1-2017/109690    JP-B2- 5 819 100
RU-C1- 2 124 445    US-A- 4 896 090
US-A- 5 544 057    US-A1- 2009 095 195

(52) Cooperative Patent Classification (CPC): (Cont.)
B60W 2510/18; B60W 2520/28; B60W 2710/18;
G01G 19/086

**Description**

TECHNICAL FIELD

The present invention relates generally to safety arrangements for rail vehicle braking systems. Especially, the invention relates to a controller according to the preamble of claim 1 for estimating individual axle weights of a rail vehicle to enable enhanced braking of the rail vehicle. The invention also relates to a corresponding computer-implemented method, a computer program and a non-volatile data carrier storing such a computer program.

BACKGROUND

In operation of an electrically powered rail vehicle, the onboard motors are typically engaged as generators to decelerate the rail vehicle. However, for efficiency and safety reasons, one cannot rely solely on this braking strategy. In particular, a dedicated brake function will always be needed to ensure emergency braking functionality and that the rail vehicle remains stationary after that it has been brought to a stop. In many cases, the same brake units are used for different types of braking functionality, such as service braking, emergency braking and parking braking.

When braking a rail vehicle it is key to have accurate information about the adhesion conditions at the wheel-rail interface, i.e. the applicable kinetic friction coefficient. However, to accomplish a truly efficient retardation of the rail vehicle it is further important to know how the rail vehicle's weight is distributed over its wheel axles. Namely, only a comparatively low brake force can be applied to a relatively lightly loaded axle before its wheels start to slide against the rails, whereas a relatively heavily loaded axle may be subjected to a comparatively high brake force before its wheels starts to slide against the rails. Both for efficiency reasons and to avoid material damage, primarily on the wheels, wheel sliding shall be avoided as far as possible. Therefore, in many cases, to be on the safe side, an estimated lowest axle weight may determine the maximum brake force that can be applied by the rail vehicle. Of course, this results in an overall suboptimal braking performance.

Various attempts have been made to determine the total weight of a vehicle. For example, US 9,358,846 describes a load estimation system and method for estimating vehicle load. The system includes a tire rotation counter for generating a rotation count from rotation of a tire; apparatus for measuring distance travelled by the vehicle; an effective radius calculator for calculating effective radius of the tire from the distance travelled and the rotation count; and a load estimation calculator for calculating the load carried by the vehicle tire from the effective radius of the tire. A center of gravity height estimation may be made from an estimated total load carried by the tires supporting the vehicle pursuant to an estimation of effective radius for each tire and a calculated load carried by each tire from respective effective radii.

US 9,500,514 shows a method and a system for estimating a weight for a vehicle on the basis of at least two forces which act upon the vehicle. The forces are a motive force and at least one further force, and topographical information for a relevant section of road. The estimation is performed when the at least two forces are dominated by the motive force.

US 9,211,879 discloses devices and methods, which relate to the arrangement of a sensor on the shaft of a rail vehicle to determine its mass. For example, an output signal of an acceleration sensor is evaluated, which is disposed on a shaft of the rail vehicle. The mass of a freight wagon can be determined in that it vibrates in a manner typical to the mass (frequency, amplitude) after impact (switching impact, running over a switch). The impact can be determined in direction and intensity by the acceleration sensor on the shaft (axle), the vibration can be determined by the same acceleration sensor or by a further sensor on the chassis. From this measurement data, the mass of the wagon and the mass of the load with known empty weight and thereby the loading state can be determined. A further example is known from the document US 4 896 090 A.

The above documents describe different strategies for determining the weight as well as other characteristic properties of vehicles. However, there is yet no satisfying solution for establishing how a vehicle's total weight is distributed over its axles, such that for example braking of the vehicle may be improved.

SUMMARY

The object of the present invention is to solve the above problems and offer a solution that enables determining the individual axle weights of a rail vehicle in an accurate and reliable manner.

According to one aspect of the invention, the object is achieved by a controller for estimating individual axle weights of a rail vehicle with a number of wheel axles and a set of brake units configured to apply a respective brake force to each of the wheel axles so as to cause retardation of the rail vehicle. The controller is configured to obtain power and speed signals. The power signal indicates an amount of power produced by an onboard motor to accelerate the rail vehicle from a first speed to a second speed. The speed signal indicates respective values of the first and second speeds. Based on the power and speed signals, the controller is configured to estimate an overall weight of the rail vehicle. The controller is further configured to:

(a) obtain wheel speed signals indicating respective rotational speeds of the wheel axles,
(b) produce a brake control signal to a specific brake unit in the set of brake units, such that this brake unit applies a gradually increasing brake force to a specific wheel axle of said wheel axles,

(c) determine, repeatedly during production of the brake control signal, an absolute difference between the rotational speed of the specific wheel axle and an average rotational speed of the wheel axles except the specific wheel axle, and in response to the absolute difference exceeding a threshold value

(d) determine a parameter reflecting a friction coefficient between a pair of wheels on the specific wheel axle and a pair of rails upon which the rail vehicle travels,

repeat steps (a) to (c) for each of the rail vehicle's wheel axles, and based thereon estimate a respective fraction of the overall weight carried by each of said wheel axles.

The above controller is advantageous because it provides accurate values of the overall weight of the rail vehicle as well as the individual axle weights. As a bonus effect, this also enables the rail vehicle to accelerate without risking slippage.

Furthermore, the proposed controller is beneficial, since it allows for dynamic adaptation of the braking functionality during travel in response to redistribution of the load, e.g. due to passengers moving around. More important, the operation of the brakes may be adequately adjusted whenever cargo is loaded and/or unloaded in a very convenient manner.

According to one embodiment of this aspect of the invention, the controller contains at least one interface configured to receive first and second vector signals. The first vector signal expresses an acceleration of the rail vehicle, as such, for instance laterally and vertically. The second vector signal expresses a respective rotational movement of the wheels on each of the rail vehicle's wheel axles. Thus, the rotational movement is performed in a plane being orthogonal to a respective rotation axis of the wheel axle. The controller is configured to obtain the wheel speed signals indicating the respective rotational speeds based on the first and second vector signals. Thereby, accurate values of the wheel speed can be derived without any tachometer. This, in turn, vouches for robust and reliable measurements.

Preferably, the first vector signal further expresses an inclination angle of the rail vehicle relative to a horizontal plane. Namely, this enables the controller to adjust the power signal indicating the amount of power produced by the onboard motor and/or the speed signal indicating the second speed based on the inclination angle when estimating the overall weight of the rail vehicle. Such adjustment is necessary if the overall weight of the rail vehicle is estimated when the rail vehicle travels on non-horizontal ground because in an uphill slope a part of the motor power is converted into potential energy, and conversely, in a downhill slope a part of the kinetic energy originates from potential energy.

According to another embodiment of this aspect of the invention, the controller is configured to provide the respective fractions of the overall weight to a braking controller to enable the braking controller to produce a respective brake force signal to each brake unit in the set of brake units. Hence, respective brake force signals may be based on the respective fractions of the overall weight, and the rail vehicle can be retarded in an optimized manner.

Preferably, in the light of the above, the controller is co-located with the braking controller. For example the controller may be integrated into the braking controller, or vice versa.

According to yet another embodiment of this aspect of the invention, the controller is configured to transmit the brake control signal via a data bus in the rail vehicle. This renders the implementation cost-efficient and flexible.

According to another aspect of the invention, the object is achieved by a computer-implemented method for estimating individual axle weights of a rail vehicle with a number of wheel axles and a set of brake units configured to apply a respective brake force to each of the wheel axles so as to cause retardation of the rail vehicle, which method is performed in at least one processor involves obtaining a power signal indicating an amount of power produced by an onboard motor to accelerate the rail vehicle from a first speed to a second speed, obtaining a speed signal indicating respective values of the first and second speeds, and based thereon estimating an overall weight of the rail vehicle. The method further involves:

(a) obtaining wheel speed signals indicating respective rotational speeds of the wheel axles,

(b) producing a brake control signal to a specific brake unit in the set of brake units such that this brake unit applies a gradually increasing brake force to a specific one of the wheel axles,

(c) determining, repeatedly during production of the brake control signal, an absolute difference between the rotational speed of the specific wheel axle and an average rotational speed of wheel axles except the specific wheel axle; and in response to the absolute difference exceeding a threshold value

(d) determining a parameter reflecting a friction coefficient between a pair of wheels on the specific wheel axle and a pair of rails upon which the rail vehicle travels,

repeating steps (a) to (c) for each of said wheel axles, and based thereon estimating a respective fraction of the overall weight carried by each of said wheel axles.

The advantages of this method, as well as the preferred embodiments thereof are apparent from the discussion above with reference to the proposed controller.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

BRIEF DESCRIPTION OF THE DRAWINGS

The invention is now to be explained more closely by means of preferred embodiments, which are disclosed as examples, and with reference to the attached drawings.

Figure 1 schematically illustrates a rail vehicle equipped with a controller according to one embodiment of the invention;

Figure 2 shows a brake unit according to one embodiment of the invention;

Figure 3 shows a graph illustrating an example of the friction coefficient as a function of wheel slippage;

Figure 4 schematically illustrates an accelerometer according to one embodiment of the invention;

Figure 5 shows a block diagram of a controller according to one embodiment of the invention; and

Figure 6 illustrates, by means of a flow diagram, the general method according to the invention.

DETAILED DESCRIPTION

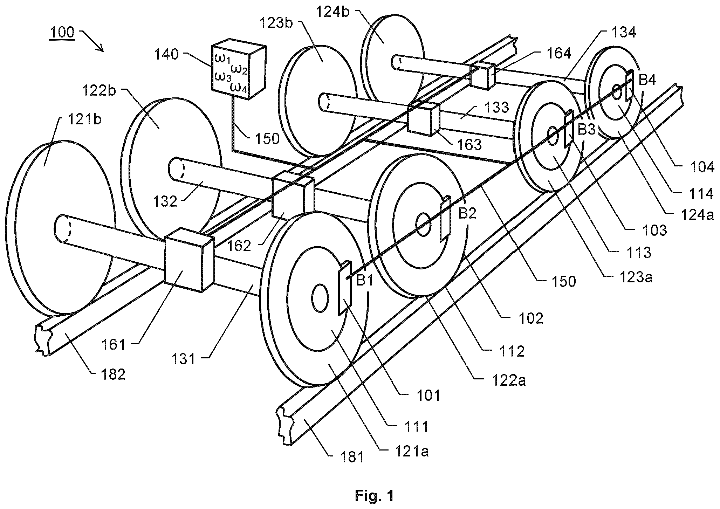

In Figure 1, we see a schematic illustration of a rail vehicle 100 equipped with a controller 140 according to one embodiment of the invention.

The controller 140 is arranged to estimate individual axle weights of the rail vehicle 100, which has a number of wheel axles. Figure 1 exemplifies four such wheel axles in the form of 131, 132, 133 and 134 respectively. Typically, in practice, a rail vehicle contains a substantially larger number of wheel axles. Traditionally, each bogie has two wheel axles carrying altogether four wheels, and each car body of the rail vehicle 100 includes a respective bogie in the front and rear ends.

The rail vehicle 100 also contains a set of brake units 101, 102, 103 and 104 respectively configured to apply a respective brake force to each of the wheel axles 131, 132, 133 and 134. Consequently, by operating the brake units 101, 102, 103 and 104, the rail vehicle 100 may be caused to retard/decelerate.

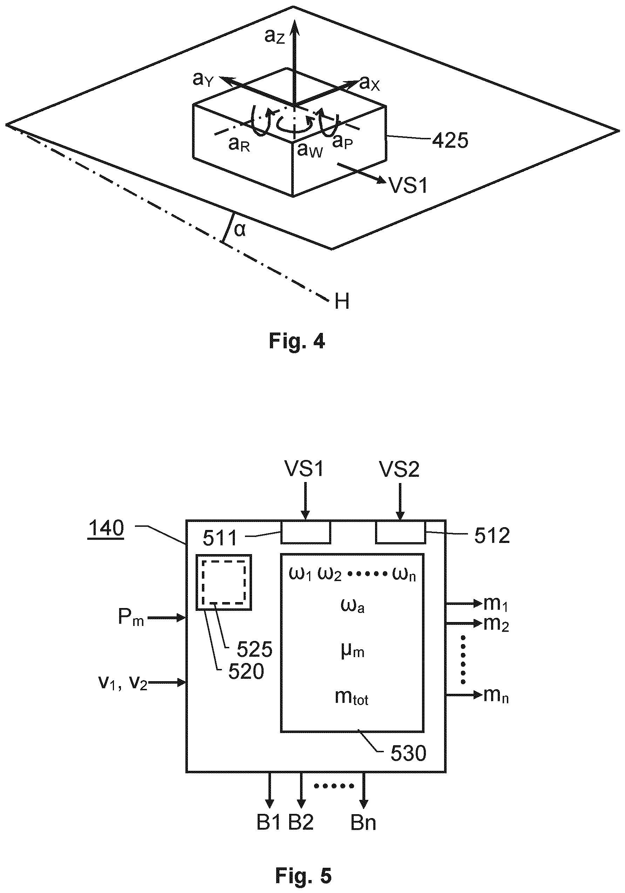

Referring now to Figure 5, the controller 140 is configured to obtain a power signal $P_m$ indicating an amount of power produced by an onboard motor to accelerate the rail vehicle 100 from a first speed $v_1$ to a second speed $v_2$, for example from a standstill to 10 km/h. Of course, however, according to the invention, the power signal $P_m$ may equally well be received during acceleration between any other two speed levels. In any case, the controller 140 is configured to obtain a speed signal indicating respective values of the first and second speeds $v_1$ and $v_2$.

Based on the power signal $P_m$ and the values of the first and second speeds $v_1$ and $v_2$, the controller 140 is configured to estimate an overall weight $m_{tot}$ of the rail vehicle 100.

This may be done under the assumption that any losses in the motor and losses due to wind and rolling resistance are negligible, which is basically true for low speeds. Namely, if so, all the supplied power is converted into kinetic energy of the rail vehicle, i.e. $P \cdot t = W_k$, where P is the supplied power, t is the time during which the power has been supplied and $W_k$ is the resulting kinetic energy.

The resulting kinetic energy $W_k$, in turn, may be expressed as:

$$W_k = m_{tot} \cdot v^2/2,$$

where $v = v_2 - v_1$.

In other words, the controller 140 may calculate the overall weight $m_{tot}$ of the rail vehicle 100 as:

$$m_{tot} = \frac{(v_2 - v_1)^2}{2Pt}$$

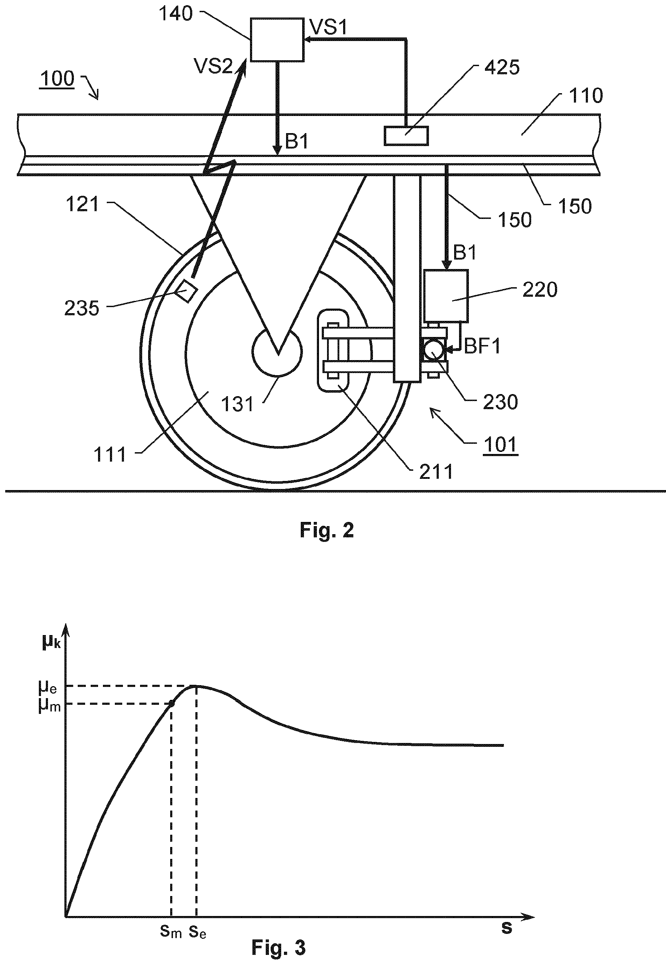

Referring now also to Figure 2, the controller 140 is further configured to:

(a) obtain wheel speed signals indicating respective rotational speeds $\omega_1$, $\omega_2$, $\omega_3$ and $\omega_4$ of the wheel axles 131, 132, 133 and 134 respectively,

(b) produce a brake control signal B1 to a specific brake unit 101 in the set of brake units such that this brake unit 101 applies a gradually increasing brake force to a specific wheel axle in the rail vehicle 100, here exemplified by 131,

(c) determine, repeatedly during production of the brake control signal B1, an absolute difference $|\omega_1 - \omega_a|$ between the rotational speed of the specific wheel axle 131 and an average rotational speed $\omega_a$ of all the rail vehicle's 100 wheel axles except the specific wheel axle 131, and in response to the absolute difference $|\omega_1 - \omega_a|$ exceeding a threshold val-

ue

(d) determine a parameter $\mu_m$ reflecting a friction coefficient $\mu_e$ between a pair of wheels 121a and 121b respectively on the specific wheel axle 131 and a pair of rails 181 and 182 upon which the rail vehicle 100 travels.

Figure 3 shows a graph illustrating an example of how the kinetic friction coefficient $\mu_k$ may be expressed as a function of the wheel slippage s, which here is understood to designate a sliding motion of the wheel relative to the rail. However, technically, the wheel slippage s may equally well express a spinning motion of the wheel relative to the rail. In other words, the wheel slippage s is applicable to a retardation scenario as well as an acceleration ditto.

Characteristically, for lower values, the kinetic friction coefficient $\mu_k$ increases relatively proportionally with increasing wheel slippage s. When approaching a peak value $\mu_e$, however, the kinetic friction coefficient $\mu_k$ levels out somewhat. After having passed the peak value, the kinetic friction coefficient $\mu_k$ is essentially constant for all values of the wheel slippage s. Thus, the friction coefficient peak value $\mu_e$ is associated with an optimal wheel slippage $s_e$ after which a further increase of wheel slippage s results in a gradually reduced, and then almost constant kinetic friction coefficient $\mu_k$.

According to the invention, a parameter $\mu_m$ is determined that reflects the friction coefficient between the rail vehicle's 100 wheels and the rails 181 and 182 upon which the rail vehicle 100 travels. Ideally, the peak value $\mu_e$ should be derived. For example, the peak value $\mu_e$ may be derived as follows. When the absolute difference $|\omega_1 - \omega_a|$ between the rotational speed of the specific wheel axle 131 and an average rotational speed $\omega_a$ of all the rail vehicle's 100 wheel axles except the specific wheel axle 131 exceeds the threshold value, this corresponds to a situation where the wheels 121a and 121b on the specific wheel axle 131 experiences a wheel slippage $s_m$ near the optimal wheel slippage $s_e$. The kinetic friction coefficient $\mu_k$ is given by the expression:

$$\mu_k = \frac{F}{m_{tot} \cdot g}$$

where

F is the force applied by the brake unit,
$m_{tot}$ is the overall weight of the rail vehicle 100, and
g is the standard acceleration due to gravity.

Under the assumption that the wheel slippage $s_m$ is near the optimal wheel slippage $s_e$, the peak value $\mu_e$ of the kinetic friction coefficient $\mu_k$ may be estimated relatively accurately; and the proximity of wheel slippage $s_m$ to the optimal wheel slippage $s_e$ is ensured by said threshold value for the absolute difference $|\omega_1 - \omega_a|$ between the rotational speed of the specific wheel axle 131 and the average rotational speed $\omega_a$ of all the rail vehicle's 100 wheel axles except the specific wheel axle 131.

Finally, the controller 140 is configured to repeat steps (a) to (c) for each wheel axle 131, 132, 133 and 134 of the rail vehicle 100, and based thereon estimate a respective fraction $m_1, m_2, ..., m_n$ of the overall weight $m_{tot}$ carried by each of these wheel axles.

It is worth mentioning that the above-mentioned specific wheel axle 131 does not need to be any particular wheel axle, e.g. a frontmost or a rearmost wheel axle of the rail vehicle 100. On the contrary, the above procedure may start with an arbitrary selected wheel axle in the rail vehicle 100.

Moreover, it is generally advantageous to execute the above procedure in line with a schedule, fixed or dynamic, wherein each wheel axle in the rail vehicle 100 alternately either represents the specific wheel axle or is included in the complement set, i.e. all the wheel axles except the specific wheel axle. Repeated execution of procedure is nevertheless beneficial to enable adjustment of the braking functionality in response to any changes in the overall weight $m_{tot}$ and/or a redistribution of the overall weight $m_{tot}$ over the wheel axles.

The controller 140 may be configured to produce control signals B1, B2, B3 and B4 to the brake units 101, 102, 103 and 104 respectively, such that an average brake force applied to the wheel axles 132, 133 and 134 except the specific wheel axles 131 is gradually decreased when the brake force applied to the specific wheel axle 131 is gradually *increased*. In other words, the braking on the other wheel axles 132, 133 and 134 compensate for the somewhat excessive force applied to the specific wheel axle 131.

Preferably, this compensation is temporally matched. This means that the controller 140 is configured to produce the control signals B1, B2, B3 and B4 such that, at each point in time, the gradual decrease of the average brake force applied to the wheel axles 132, 133 and 134 except the specific wheel axles 131 corresponds to the gradual increase of the brake force applied to the specific wheel axle 131. Namely, thereby the deviating brake force applied to specific wheel axle 131 is masked by the opposite deviation represented by the brake force applied to the wheel axles 132, 133 and 134 except the specific wheel axles 131.

Referring again to Figure 2, we see a brake unit 101 according to one embodiment of the invention. The brake unit 101 is configured to receive the control signals, e.g. representing a brake command B1 from the controller 140, for example via a data bus 150. In response thereto, the brake unit 101 is configured to execute a brake action. The brake unit 101 may contain a rotatable member 111, first and second pressing members, here symbolized by 211, a brake actuator 220, a gear assembly (not shown) and an electric motor 230. The rotatable member 111, which may be represented by a brake disc or a brake drum is mechanically linked to at least one wheel 121 of the rail vehicle 100. Specifically, in response to the brake command B1, the brake actuator 220 is preferably configured to produce a brake force signal BF1 to the electric motor 230, which, in turn, causes the electric motor 230 to cause the first and second pressing members 211 to move relative to the rotatable member 111.

It should be pointed out that, according to the invention, the electric motor 230 may be replaced by a pneumatically operated piston-and-cylinder arrangement configured to actuate the first and second pressing members 211.

Further, for the overall efficiency, the data bus 150 may, of course, be configured to transmit the all the control signals B1, B2, B3 and B4 from the controller 140 to each brake unit in the set of brake units 101, 102, 103 and/or 104.

Each of the first and second pressing members 211 is configured to move relative to the rotatable member 111 to execute the brake action. Typically, the brake action involves applying a particular brake force on the rotatable member 111. However, the brake action may also involve reducing or releasing an already applied brake force.

Referring now to Figures 4 and 5, according to one embodiment of the invention, the controller 140 contains at least one interface 511 and 512 configured to receive first and second vector signals VS1 and VS2 respectively. The first vector signal VS1 expresses an acceleration $a_X$, $a_Y$, $a_Z$, $a_R$, $a_P$, and/or aw of the rail vehicle 100 in at least one dimension, for instance linearly in one or more spatial directions and/or rotations around one or more of these directions. The second vector signal VS2 expresses a respective rotational movement of the wheels 121a, 121b; 122a, 122b; 123a, 123b and 124a, 124b on each of the wheel axles. Consequently, since each wheel is configured to rotate around a respective one of the wheel axles, the rotational movement is performed in a plane being orthogonal to a respective rotation axis of the wheel axle.

The controller 140 is configured to obtain the wheel speed signals indicating the respective rotational speeds $\omega_1$, $\omega_2$, $\omega_3$ and $\omega_4$ based on the first and second vector signals VS1 and VS2 by applying physical mechanics algorithms known in the art. Of course, determining the average rotational speed $\omega_a$ is trivial once each of the individual rotational speeds $\omega_1$, $\omega_2$, $\omega_3$ and $\omega_4$ is known.

Figure 4 schematically illustrates a first accelerometer 425 according to one embodiment of the invention. The first accelerometer 425 is arranged in a frame element 110 of the rail vehicle 100. The first accelerometer 425 is configured to produce the first vector signal VS1 representing an acceleration of the a rail vehicle 100 in at least one dimension, typically in each of the three spatial directions $a_X$, $a_Y$ and $a_Z$ and respective rotations $a_R$, $a_P$ and $a_W$ around axes along each of these directions.

Preferably, according to one embodiment of the invention, the first vector signal VS1 further expresses an inclination angle $\alpha$ of the rail vehicle 100 relative to a horizontal plane H. Here, the controller 140 is configured to adjust the power signal $P_m$ indicating the amount of power produced by the onboard motor and/or the speed signal indicating the second speed $v_2$ based on the inclination angle a when estimating the overall weight $m_{tot}$ of the rail vehicle 100. Consequently, the estimate of the overall weight $m_{tot}$ may be adequately adjusted if the rail vehicle 100 travels on non-horizontal ground when obtaining the power signal $P_m$ and the speed signal, such that in an uphill slope the part of the motor power that is converted into potential energy is discarded; and conversely, in a downhill slope the part of the kinetic energy originating from potential energy is discarded.

Naturally, for the same reasons, it is also preferable to compensate for the inclination angle a when repeatedly executing the above steps (a) to (c) to estimate the respective fraction $m_1$, $m_2$, ..., $m_n$ of the overall weight $m_{tot}$ carried by each of the wheel axles 131, 132, 133 and 134 of the rail vehicle 100.

Figure 2 illustrates a second accelerometer 235 that is eccentrically arranged relative to a rotation axis of at least one wheel, say 121. The second accelerometer 235 is configured to produce the second vector signal VS2 expressing movements of the second accelerometer 235 in a plane orthogonal to the rotation axis of the at least one wheel 121, and transmit a signal containing the second vector signal VS2 to the controller 140.

Figure 5 shows a block diagram of the controller 140 according to one embodiment of the invention. The controller 140 includes processing circuitry in the form of at least one processor 530 and a memory unit 520, i.e. non-volatile data carrier, storing a computer program 525, which, in turn, contains software for making the at least one processor 530 execute the actions mentioned in this disclosure when the computer program 525 is run on the at least one processor 530.

The controller 140 contains input interfaces configured to receive the first and second vector signals VS1 and VS2 respectively and the power signal $P_m$ and the speed signal expressing the speeds $v_1$ and $v_2$ respectively. Further, the controller 140 contains outputs configured to provide the control signals B1, B2, B3 and B4 information about the individual axle weights, such as the respective fractions $m_1$, $m_2$,..., $m_n$ of the overall weight $m_{tot}$. As mentioned above, one or more of the input and/or output signals may be communicated via the data bus 150.

According to one embodiment of the invention, the controller 140 is configured to provide the respective fractions $m_1$, $m_2$,..., $m_n$ of the overall weight $m_{tot}$ to each braking controller 161, 162, 163 and 164 to enable the braking controllers to cause its associated brake actuator 220 to produce a respective appropriate brake force signal BF1. The appropriate brake force signal BF1 is here a brake force signal that is based on the respective fraction $m_1$ of the overall weight $m_{tot}$ applicable to the wheel axle in question, e.g. 131.

According to one embodiment of the invention, the controller 140 is co-located with the braking controller. Thus, for example, the controller 140 may be integrated into the braking controller 161, or vice versa. Alternatively, the functionality of the controller 140 may be distributed over two or more of the braking controllers 161, 162, 163 and/or 164.

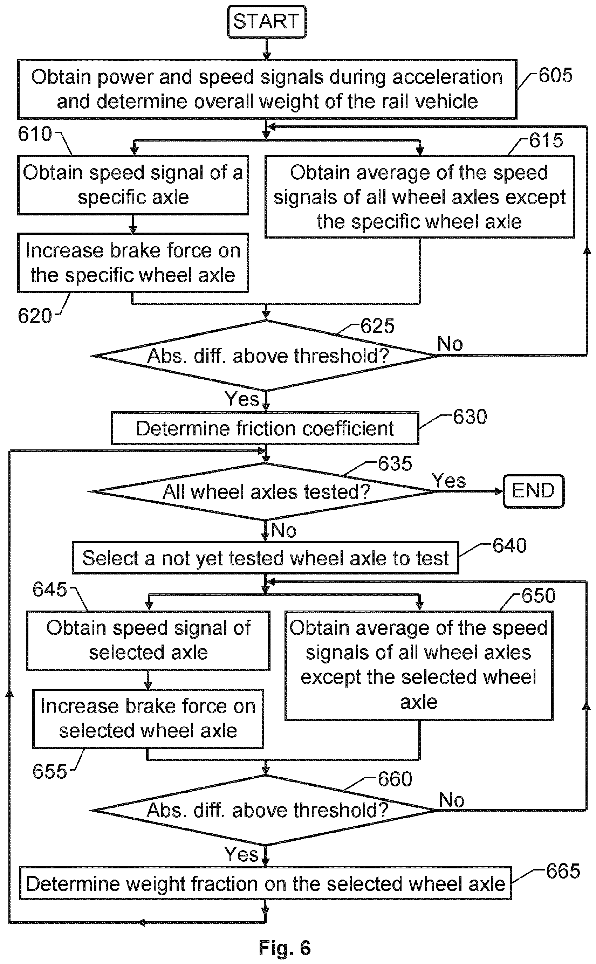

In order to sum up, and with reference to the flow diagram in Figure 6, we will now describe the computer-implemented method for a rail vehicle that is carried out by the controller 140.

In a first step 605, signals are obtained that express first and second speeds $v_1$ and $v_2$ and an amount of power produced by a motor onboard the rail vehicle 100 to accelerate it from the first speed $v_1$ to the second speed $v_2$.

In a step 610 thereafter, a speed signal is obtained, which indicates a rotational speed $\omega_1$ of a specific one the rail vehicle's 100 wheel axles, say 131.

In a step 615, preferably essentially parallel to step 610, an average value is obtained, which represents an average $\omega_a$ of the rotational speeds $\omega_2$, $\omega_3$ and $\omega_4$ of the rail vehicle's 100 wheel axles 132, 133 and 134 except the specific wheel axle 131.

In a step 620 subsequent to step 610 and preferably essentially parallel to step 615, a brake control signal is produced that is configured to cause a brake unit to apply an increased brake force to the specific wheel axle 131.

Thereafter, a step 625 checks if an absolute difference $|\omega_1 - \omega_a|$ between the rotational speed of the specific wheel axle 131 and the average rotational speed $\omega_a$ of the wheel axles except the specific wheel axle exceeds a threshold value. If so, a step 630 follows. Otherwise, the procedure loops back to steps 610 and 615.

In step 630, a parameter $\mu_m$ is determined that reflects a friction coefficient $\mu_e$ between the wheels 121a and 121b on the specific wheel axle 131 and the rails 181 and 182 upon which the rail vehicle 100 travels.

Subsequently, a step 635 checks if all the wheel axles 131, 132, 133 and 134 of the rail vehicle 100 have been tested. If so, the procedure ends. If not, the procedure continues to a step 640 in which a not yet tested wheel axle is selected.

Then, in a step 645, a speed signal is obtained, which indicates a rotational speed $\omega_1$ of the selected wheel axle.

In a step 650, preferably essentially parallel to step 645, an average value is obtained, which represents an average $\omega_a$ of the rotational speeds of the rail vehicle's 100 wheel axles except the selected wheel axle.

In a step 655 subsequent to step 645 and preferably essentially parallel to step 650, a brake control signal is produced that is configured to cause a brake unit to apply an increased brake force to the selected wheel axle.

Thereafter, a step 660 checks if an absolute difference between the rotational speed of the selected wheel axle and the average rotational speed $\omega_a$ of the wheel axles except the selected wheel axle exceeds a threshold value. If so, a step 665 follows. Otherwise, the procedure loops back to steps 645 and 650.

In step 665, a respective fraction of the overall weight $m_{tot}$ carried by the selected wheel axle is estimated. Thereafter, the procedure loops back to step 635. It should be noted that the fraction of the overall weight $m_{tot}$ carried by the first wheel axle may be determined as a remaining faction of the overall weight $m_{tot}$ when the respective fractions on all the other wheel axles have been determined.

All of the process steps, as well as any subsequence of steps, described with reference to Figure 6 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

Variations to the disclosed embodiments can be understood and effected by those skilled in the art in practicing the claimed invention, from a study of the drawings, the description of the invention, and the appended claims. The invention is not restricted to the described embodiments in the figures, but may be varied freely within the scope of the claims.

## Claims

1. A controller (140) for estimating individual axle weights of a rail vehicle (100) comprising a number of wheel axles (131, 132, 133, 134) and a set of brake units (101, 102, 103, 104) configured to apply a respective brake force to each of the wheel axles (131, 132, 133, 134) so as to cause retardation of the rail vehicle (100), which controller (140) is configured to obtain:

   a power signal ($P_m$) indicating an amount of power produced by an onboard motor to accelerate the rail vehicle (100) from a first speed ($v_1$) to a second speed ($v_2$),
   a speed signal indicating respective values of the first and second speeds ($v_1$, $v_2$),

   and based thereon estimate an overall weight ($m_{tot}$) of the rail vehicle (100), **characterized in that** the controller (140) is further configured to:

   (a) obtain wheel speed signals indicating respective rotational speeds ($\omega_1$, $\omega_2$, $\omega_3$, $\omega_4$) of the wheel axles (131, 132, 133, 134),
   (b) produce a brake control signal (B1) to a specific brake unit (101) in the set of brake units such that this brake unit applies a gradually increasing brake force to a specific wheel axle (131) of said wheel axles,
   (c) determine, repeatedly during production of the brake control signal (B1), an absolute difference ($|\omega_1 - \omega_a|$) between the rotational speed of the specific wheel axle (131) and an average rotational speed ($\omega_a$) of said wheel axles except the specific wheel axle; and in response to the absolute difference exceeding a threshold value
   (d) determine a parameter ($\mu_m$) reflecting a friction coefficient ($\mu_e$) between a pair of wheels (121a, 121b) on the specific wheel axle (131) and a pair of rails (181, 182) upon which the rail vehicle (100) travels,

   repeat steps (a) to (c) for each of said wheel axles, and based thereon estimate a respective fraction ($m_1$, $m_2$, $m_n$) of the overall weight ($m_{tot}$) carried by each of said wheel axles.

2. The controller (140) according to claim 1, comprising at least one interface (511, 512) configured to receive first and second vector signals (VS1, VS2), wherein

   the first vector signal (VS1) expresses an acceleration ($a_X$, $a_Y$, $a_Z$, $a_R$, $a_P$, $a_W$) of the rail vehicle (100) in at least one dimension, and
   the second vector signal (VS2) expresses a respective rotational movement of the wheels (121a, 121b; 122a, 122b; 123a, 123b; 124a, 124b) on each wheel axle of said wheel axles (131, 132, 133, 134), which rotational movement is performed in a plane orthogonal to a respective rotation axis of the wheel axle, and

   wherein the controller (140) is configured to obtain the wheel speed signals indicating the respective rotational speeds ($\omega_1$, $\omega_2$, $\omega_3$, $\omega_4$) based on the first and second vector signals (VS1, VS2).

3. The controller (140) according to claim 2, wherein the first vector signal (VS1) further expresses an inclination angle ($\alpha$) of the rail vehicle (100) relative to a horizontal plane (H), and the controller (140) is configured to adjust at least one of the power signal ($P_m$) indicating the amount of power produced by the onboard motor and the speed signal indicating the second speed ($v_2$) based on the inclination angle ($\alpha$) when estimating the overall weight ($m_{tot}$) of the rail vehicle (100).

4. The controller (140) according to any one of the preceding claims, wherein the controller (140) is configured to provide the respective fractions ($m_1$, $m_2$, $m_n$) of the overall weight ($m_{tot}$) to a braking controller to enable the braking controller to produce a respective brake force signal (BF1) to each brake unit (101) in the set of brake units (101, 102, 103, 104), which respective brake force signal (BF1) is based on the respective fractions ($m_1$, $m_2$, $m_n$) of the overall weight ($m_{tot}$).

5. The controller (140) according to claim 4, wherein the controller (140) is co-located with the braking controller (161, 162, 163, 164).

6. The controller (140) according to any one of the preceding claims, wherein the controller (140) is configured to transmit the brake control signal (B1, B2, B3, B4) via a data bus (150) in the rail vehicle (100).

7. A computer-implemented method for estimating individual axle weights of a rail vehicle (100) comprising a number of wheel axles (131, 132, 133, 134) and a set of brake units (101, 102, 103, 104) configured to apply a respective brake force to each of the wheel axles (131, 132, 133, 134) so as to cause retardation of the rail vehicle (100), which method is performed in at least one processor (530) and comprises:

obtaining a power signal ($P_m$) indicating an amount of power produced by an onboard motor to accelerate the rail vehicle (100) from a first speed ($v_1$) to a second speed ($v_2$),
obtaining a speed signal indicating respective values of the first and second speeds ($v_1$, $v_2$), and based thereon
estimating an overall weight ($m_{tot}$) of the rail vehicle (100), **characterized by**:

(a) obtaining wheel speed signals indicating respective rotational speeds ($\omega_1$, $\omega_2$, $\omega_3$, $\omega_4$) of the wheel axles (131, 132, 133, 134),
(b) producing a brake control signal (B1) to a specific brake unit (101) in the set of brake units such that this brake unit applies a gradually increasing brake force to a specific wheel axle (131) of said wheel axles,
(c) determining, repeatedly during production of the brake control signal (B1), an absolute difference ($|\omega_1 - \omega_a|$) between the rotational speed of the specific wheel axle (131) and an average rotational speed ($\omega_a$) of said wheel axles except the specific wheel axle; and in response to the absolute difference exceeding a threshold value
(d) determining a parameter ($\mu_m$) reflecting a friction coefficient ($\mu_e$) between a pair of wheels (121a, 121b) on the specific wheel axle (131) and a pair of rails (181, 182) upon which the rail vehicle (100) travels,

repeating steps (a) to (c) for each of said wheel axles, and based thereon
estimating a respective fraction ($m_1$, $m_2$, $m_n$) of the overall weight ($m_{tot}$) carried by each of said wheel axles.

8.  The method according to claim 7, comprising:

receiving first and second vector signals (VS1, VS2) via at least one interface (511, 512), which first vector signal (VS1) expresses an acceleration ($a_X$, $a_Y$, $a_Z$, $a_R$, $a_P$, $a_W$) of the rail vehicle (100) in at least one dimension, which second vector signal (VS2) expresses a respective rotational movement of the wheels (121a, 121b; 122a, 122b; 123a, 123b; 124a, 124b) on each wheel axle of said wheel axles (131, 132, 133, 134), which rotational movement is performed in a plane orthogonal to a respective rotation axis of the wheel axle, and
obtaining the wheel speed signals indicating the respective rotational speeds ($\omega_1$, $\omega_2$, $\omega_3$, $\omega_4$) based on the first and second vector signals (VS1, VS2).

9.  The method according to claim 8, wherein the first vector signal (VS1) further expresses an inclination angle ($\alpha$) of the rail vehicle (100) relative to a horizontal plane (H), and the method comprises:
adjusting at least one of the power signal ($P_m$) indicating the amount of power produced by the onboard motor and the speed signal indicating the second speed ($v_2$) based on the inclination angle ($\alpha$) when estimating the overall weight ($m_{tot}$) of the rail vehicle (100).

10. The method according to any one of the claims 7 to 9, further comprising:
providing the respective fractions ($m_1$, $m_2$, $m_n$) of the overall weight ($m_{tot}$) to a braking controller to enable the braking controller to produce a respective brake force signal (BF1) to each brake unit (101) in the set of brake units (101, 102, 103, 104), which respective brake force signal (BF1) is based on the respective fractions ($m_1$, $m_2$, $m_n$) of the overall weight ($m_{tot}$).

11. The method according to any one of the claims 7 to 10, comprising:
transmitting the brake control signal (B1, B2, B3, B4) via a data bus (150) in the rail vehicle (100).

12. A computer program (525) loadable into a non-volatile data carrier (520) communicatively connected to at least one processor (530), the computer program (525) comprising software for executing the method according any of the claims 7 to 11 when the computer program (525) is run on the at least one processor (530).

13. A non-volatile data carrier (520) containing the computer program (425) of the claim 12.

**Patentansprüche**

1.  Steuerung (140) zum Schätzen einzelner Achsgewichte eines Schienenfahrzeugs (100), umfassend eine Anzahl von Radachsen (131, 132, 133, 134) und einen Satz von Bremseinheiten (101, 102, 103, 104), der dazu konfiguriert ist, eine jeweilige Bremskraft auf jede der Radachsen (131, 132, 133, 134) auszuüben, um dadurch eine Verzögerung des Schienenfahrzeugs (100) zu bewirken, wobei die Steuerung (140) dazu konfiguriert ist, Folgendes zu erlangen:

ein Leistungssignal ($P_m$), das eine Menge an Leistung angibt, die von einem fahrzeuginternen Motor erzeugt wird, um das Schienenfahrzeug (100) von einer ersten Geschwindigkeit ($v_1$) auf eine zweite Geschwindigkeit ($v_2$) zu beschleunigen,

ein Geschwindigkeitssignal, das jeweilige Werte der ersten und der zweiten Geschwindigkeit ($v_1$, $v_2$) angibt

und auf Grundlage dessen ein Gesamtgewicht ($m_{tot}$) des Schienenfahrzeugs (100) schätzt, **dadurch gekennzeichnet, dass** die Steuerung (140) ferner zu Folgendem konfiguriert ist:

(a) Erlangen von Radgeschwindigkeitssignalen, die jeweilige Drehgeschwindigkeiten ($\omega_1$, $\omega_2$, $\omega_3$, $\omega_4$) der Radachsen (131, 132, 133, 134) angeben,
(b) Erzeugen eines Bremssteuersignals (B1) an einer spezifischen Bremseinheit (101) in dem Satz von Bremseinheiten derart, dass diese Bremseinheit eine allmählich ansteigende Bremskraft auf eine spezifische Radachse (131) der Radachsen ausübt,
(c) Bestimmen, wiederholt während der Erzeugung des Bremssteuersignals (B1), einer absoluten Differenz ($|\omega_1 - \omega_a|$) zwischen der Drehgeschwindigkeit der spezifischen Radachse (131) und einer durchschnittlichen Drehgeschwindigkeit ($\omega_a$) der Radachsen außer der spezifischen Radachse; und als Reaktion darauf, dass die absolute Differenz einen Schwellenwert überschreitet,
(d) Bestimmen eines Parameters ($\mu_m$), der einen Reibungskoeffizienten ($\mu_e$) zwischen einem Paar von Rädern (121a, 121b) an der spezifischen Radachse (131) und einem Paar von Schienen (181, 182), auf dem das Schienenfahrzeug (100) fährt, wiedergibt,

Wiederholen der Schritte (a) bis (c) für jede der Radachsen und, auf Grundlage dessen, Schätzen eines jeweiligen Anteils ($m_1$, $m_2$, $m_n$) des Gesamtgewichts ($m_{tot}$), das von jeder der Radachsen getragen wird.

2. Steuerung (140) nach Anspruch 1, umfassend mindestens eine Schnittstelle (511, 512), die dazu konfiguriert ist, ein erstes und ein zweites Vektorsignal (VS1, VS2) zu empfangen, wobei

das erste Vektorsignal (VS1) eine Beschleunigung ($a_X$, $a_Y$, $a_Z$, $a_R$, $a_P$, $a_W$) des Schienenfahrzeugs (100) in mindestens einer Dimension ausdrückt und
das zweite Vektorsignal (VS2) eine jeweilige Drehbewegung der Räder (121a, 121b; 122a, 122b; 123a, 123b; 124a, 124b) an jeder Radachse der Radachsen (131, 132, 133, 134) ausdrückt, wobei die Drehbewegung in einer Ebene senkrecht zu einer jeweiligen Drehachse der Radachse durchgeführt wird und wobei die Steuerung (140) dazu konfiguriert ist, die Radgeschwindigkeitssignale zu erlangen, die die jeweiligen Drehgeschwindigkeiten ($\omega_1$, $\omega_2$, $\omega_3$, $\omega_4$) auf Grundlage des ersten und des zweiten Vektorsignals (VS1, VS2) angeben.

3. Steuerung (140) nach Anspruch 2, wobei das erste Vektorsignal (VS1) ferner einen Neigungswinkel ($\alpha$) des Schienenfahrzeugs (100) relativ zu einer horizontalen Ebene (H) ausdrückt und die Steuerung (140) dazu konfiguriert ist, mindestens eines von dem Leistungssignal ($P_m$), das die Menge an Leistung angibt, die durch den fahrzeuginternen Motor erzeugt wird, und dem Geschwindigkeitssignal, das die zweite Geschwindigkeit ($v_2$) angibt, auf Grundlage des Neigungswinkels ($\alpha$) einzustellen, wenn das Gesamtgewicht (mtot) des Schienenfahrzeugs (100) geschätzt wird.

4. Steuerung (140) nach einem der vorhergehenden Ansprüche, wobei die Steuerung (140) dazu konfiguriert ist, die jeweiligen Anteile ($m_1$, $m_2$, $m_n$) des Gesamtgewichts ($m_{tot}$) einer Bremssteuerung bereitzustellen, um es der Bremssteuerung zu ermöglichen, ein jeweiliges Bremskraftsignal (BF1) an jeder Bremseinheit (101) in dem Satz von Bremseinheiten (101, 102, 103, 104) zu erzeugen, wobei das jeweilige Bremskraftsignal (BF1) auf den jeweiligen Anteilen ($m_1$, $m_2$, $m_n$) des Gesamtgewichts ($m_{tot}$) basiert.

5. Steuerung (140) nach Anspruch 4, wobei die Steuerung (140) gemeinsam mit der Bremssteuerung (161, 162, 163, 164) angeordnet ist.

6. Steuerung (140) nach einem der vorhergehenden Ansprüche, wobei die Steuerung (140) dazu konfiguriert ist, das Bremssteuersignal (B1, B2, B3, B4) über einen Datenbus (150) in dem Schienenfahrzeug (100) zu übertragen.

7. Computerimplementiertes Verfahren zum Schätzen einzelner Achsgewichte eines Schienenfahrzeugs (100), umfassend eine Anzahl von Radachsen (131, 132, 133, 134) und einen Satz von Bremseinheiten (101, 102, 103, 104), der dazu konfiguriert ist, eine jeweilige Bremskraft auf jede der Radachsen (131, 132, 133, 134) auszuüben, um dadurch eine Verzögerung des Schienenfahrzeugs (100) zu bewirken, wobei das Verfahren in mindestens einem Prozessor (530) durchgeführt wird und Folgendes umfasst:

Erlangen eines Leistungssignals ($P_m$), das eine Menge an Leistung angibt, die von einem fahrzeuginternen Motor erzeugt wird, um das Schienenfahrzeug (100) von einer ersten Geschwindigkeit ($v_1$) auf eine zweite Geschwindigkeit ($v_2$) zu beschleunigen,

Erlangen eines Geschwindigkeitssignals, das jeweilige Werte der ersten und der zweiten Geschwindigkeit ($v_1$, $v_2$) angibt, und auf Grundlage dessen Schätzen eines Gesamtgewichts ($m_{tot}$) des Schienenfahrzeugs (100),

**gekennzeichnet durch:**

(a) Erlangen von Radgeschwindigkeitssignalen, die jeweilige Drehgeschwindigkeiten ($\omega_1$, $\omega_2$, $\omega_3$, $\omega_4$) der Radachsen (131, 132, 133, 134) angeben,

(b) Erzeugen eines Bremssteuersignals (B1) an einer spezifischen Bremseinheit (101) in dem Satz von Bremseinheiten derart, dass diese Bremseinheit eine allmählich ansteigende Bremskraft auf eine spezifische Radachse (131) der Radachsen ausübt,

(c) Bestimmen, wiederholt während der Erzeugung des Bremssteuersignals (B1), einer absoluten Differenz ($|\omega_1 - \omega_a|$) zwischen der Drehgeschwindigkeit der spezifischen Radachse (131) und einer durchschnittlichen Drehgeschwindigkeit ($\omega_a$) der Radachsen außer der spezifischen Radachse; und als Reaktion darauf, dass die absolute Differenz einen Schwellenwert überschreitet,

(d) Bestimmen eines Parameters ($\mu_m$), der einen Reibungskoeffizienten ($\mu_e$) zwischen einem Paar von Rädern (121a, 121b) an der spezifischen Radachse (131) und einem Paar von Schienen (181, 182), auf dem das Schienenfahrzeug (100) fährt, wiedergibt,

Wiederholen der Schritte (a) bis (c) für jede der Radachsen und, auf Grundlage dessen, Schätzen eines jeweiligen Anteils ($m_1$, $m_2$, $m_n$) des Gesamtgewichts ($m_{tot}$), das von jeder der Radachsen getragen wird.

8. Verfahren nach Anspruch 7, umfassend:

Empfangen eines ersten und eines zweiten Vektorsignals (VS1, VS2) über mindestens eine Schnittstelle (511, 512), wobei das erste Vektorsignal (VS1) eine Beschleunigung ($a_X$, $a_Y$, $a_Z$, $a_R$, $a_P$, $a_W$) des Schienenfahrzeugs (100) in mindestens einer Dimension ausdrückt, wobei das zweite Vektorsignal (VS2) eine jeweilige Drehbewegung der Räder (121a, 121b; 122a, 122b; 123a, 123b; 124a, 124b) auf jeder Radachse der Radachsen (131, 132, 133, 134) ausdrückt, wobei die Drehbewegung in einer Ebene senkrecht zu einer jeweiligen Drehachse der Radachse durchgeführt wird, und

Erlangen der Radgeschwindigkeitssignale, die die jeweiligen Drehgeschwindigkeiten ($\omega_1$, $\omega_2$, $\omega_3$, $\omega_4$) auf Grundlage des ersten und des zweiten Vektorsignals (VS1, VS2) angeben.

9. Verfahren nach Anspruch 8, wobei das erste Vektorsignal (VS1) ferner einen Neigungswinkel ($\alpha$) des Schienenfahrzeugs (100) relativ zu einer horizontalen Ebene (H) ausdrückt und das Verfahren Folgendes umfasst:

Einstellen von mindestens einem von dem Leistungssignal ($P_m$), das die Menge an Leistung angibt, die von dem fahrzeuginternen Motor erzeugt wird, und dem Geschwindigkeitssignal, das die zweite Geschwindigkeit ($v_2$) angibt, auf Grundlage des Neigungswinkels ($\alpha$), wenn das Gesamtgewicht ($m_{tot}$) des Schienenfahrzeugs (100) geschätzt wird.

10. Verfahren nach einem der Ansprüche 7 bis 9, ferner umfassend:

Bereitstellen der jeweiligen Anteile ($m_1$, $m_2$, $m_n$) des Gesamtgewichts ($m_{tot}$) an eine Bremssteuerung, um es der Bremssteuerung zu ermöglichen, ein jeweiliges Bremskraftsignal (BF1) für jede Bremseinheit (101) in dem Satz von Bremseinheiten (101, 102, 103, 104) zu erzeugen, wobei das jeweilige Bremskraftsignal (BF1) auf den jeweiligen Anteilen ($m_1$, $m_2$, $m_n$) des Gesamtgewichts ($m_{tot}$) basiert.

11. Verfahren nach einem der Ansprüche 7 bis 10, umfassend:

Übertragen des Bremssteuersignals (B1, B2, B3, B4) über einen Datenbus (150) in dem Schienenfahrzeug (100).

12. Computerprogramm (525), das in einen nichtflüchtigen Datenträger (520) ladbar ist, der kommunikativ mit mindestens einem Prozessor (530) verbunden ist, wobei das Computerprogramm (525) Software zum Ausführen des Verfahrens nach einem der Ansprüche 7 bis 11 umfasst, wenn das Computerprogramm (525) auf dem mindestens einen Prozessor (530) ausgeführt wird.

13. Nichtflüchtiger Datenträger (520), der das Computerprogramm (425) nach Anspruch 12 enthält.

**Revendications**

1. Dispositif de commande (140) pour estimer des poids d'essieu individuels d'un véhicule ferroviaire (100) comprenant un certain nombre d'essieux de roue (131, 132, 133, 134) et un ensemble d'unités de frein (101, 102, 103, 104) configurées pour appliquer une force de freinage respective à chacun des essieux de roue (131, 132, 133, 134) de manière à provoquer un retard du véhicule ferroviaire (100), lequel dispositif de commande (140) est configuré pour obtenir :

un signal de puissance ($P_m$) indiquant une quantité de puissance produite par un moteur à bord pour accélérer le véhicule ferroviaire (100) à partir d'une première vitesse ($v_1$) vers une deuxième vitesse ($v_2$),
un signal de vitesse indiquant les valeurs respectives des première et deuxième vitesses ($v_1$, $v_2$),
et sur la base de celles-ci estimer un poids total ($m_{tot}$) du véhicule ferroviaire (100), **caractérisé en ce que** le dispositif de commande (140) est en outre configuré pour :

(a) obtenir des signaux de vitesse de roue indiquant les vitesses de rotation ($\omega_1$, $\omega_2$, $\omega_3$, $\omega_4$) respectives des essieux de roue (131, 132, 133, 134),
(b) produire un signal de commande de frein (B1) sur une unité de frein (101) spécifique dans l'ensemble d'unités de frein de telle sorte que cette unité de frein applique une force de freinage progressivement croissante sur un essieu de roue (131) spécifique desdits essieux de roue,
(c) déterminer, à plusieurs reprises pendant la production du signal de commande de frein (B1), une différence absolue ($|\omega_1 - \omega_a|$) entre la vitesse de rotation de l'essieu de roue (131) spécifique et une vitesse de rotation ($\omega_a$) moyenne desdits essieux de roue à l'exception de l'essieu de roue spécifique ; et en réponse à la différence absolue dépassant une valeur de seuil
(d) déterminer un paramètre ($\mu_m$) reflétant un coefficient de friction ($\mu_e$) entre une paire de roues (121a, 121b) sur l'essieu de roue (131) spécifique et une paire de rails (181, 182) sur lesquels le véhicule ferroviaire (100) circule,

répéter les étapes (a) à (c) pour chacun desdits essieux de roue, et sur la base de celles-ci estimer une fraction ($m_1$, $m_2$, $m_n$) respective du poids total ($m_{tot}$) porté par chacun desdits essieux de roue.

2. Dispositif de commande (140) selon la revendication 1, comprenant au moins une interface (511, 512) configurée pour recevoir des premier et deuxième signaux de vecteur (VS1, VS2), dans lequel

le premier signal de vecteur (VS1) exprime une accélération ($a_x$, $a_y$, $a_z$, $a_r$, $a_p$, $a_w$) du véhicule ferroviaire (100) dans au moins une dimension, et
le deuxième signal de vecteur (VS2) exprime un mouvement de rotation respectif des roues (121a, 121b ; 122a, 122b ; 123a, 123b ; 124a, 124b) sur chaque essieu de roue desdits essieux de roue (131, 132, 133, 134), lequel mouvement de rotation est réalisé dans un plan orthogonal à un axe de rotation respectif de l'essieu de roue, et dans lequel le dispositif de commande (140) est configuré pour obtenir les signaux de vitesse de roue indiquant les vitesses de rotation ($\omega_1$, $\omega_2$, $\omega_3$, $\omega_4$) respectives sur la base des premier et deuxième signaux de vecteur (VS1, VS2).

3. Dispositif de commande (140) selon la revendication 2, dans lequel le premier signal de vecteur (VS1) exprime en outre un angle d'inclinaison ($\alpha$) du véhicule ferroviaire (100) par rapport à un plan horizontal (H), et le dispositif de commande (140) est configuré pour régler au moins un du signal de puissance ($P_m$) indiquant la quantité de puissance produite par le moteur à bord et du signal de vitesse indiquant la deuxième vitesse ($v_2$) sur la base de l'angle d'inclinaison ($\alpha$) lors de l'estimation du poids total ($m_{tot}$) du véhicule ferroviaire (100).

4. Dispositif de commande (140) selon l'une quelconque des revendications précédentes, dans lequel le dispositif de commande (140) est configuré pour fournir les fractions ($m_1$, $m_2$, $m_n$) respectives du poids total ($m_{tot}$) à un dispositif de commande de freinage pour activer le dispositif de commande de freinage pour produire un signal de force de freinage (BF1) respectif à chaque unité de frein (101) dans l'ensemble d'unités de frein (101, 102, 103, 104), lequel signal de force de freinage (BF1) respectif est basé sur les fractions ($m_1$, $m_2$, $m_n$) respectives du poids total ($m_{tot}$).

5. Dispositif de commande (140) selon la revendication 4, dans lequel le dispositif de commande (140) est co-positionné avec le dispositif de commande de freinage (161, 162, 163, 164).

6. Dispositif de commande (140) selon l'une quelconque des revendications précédentes, dans lequel le dispositif de commande (140) est configuré pour transmettre le signal de commande de frein (B1, B2, B3, B4) par le biais d'un bus de données (150) dans le véhicule ferroviaire (100).

7. Procédé mis en oeuvre par ordinateur pour estimer des poids d'essieu individuels d'un véhicule ferroviaire (100) comprenant un certain nombre d'essieux de roue (131, 132, 133, 134) et un ensemble d'unités de frein (101, 102, 103, 104) configurées pour appliquer une force de freinage respective à chacun des essieux de roue (131, 132, 133, 134) de manière à provoquer un retard du véhicule ferroviaire (100), lequel procédé est réalisé dans au moins un processeur (530) et comprend :

l'obtention d'un signal de puissance ($P_m$) indiquant une quantité de puissance produite par un moteur à bord pour accélérer le véhicule ferroviaire (100) à partir d'une première vitesse ($v_1$) vers une deuxième vitesse ($v_2$),
l'obtention d'un signal de vitesse indiquant les valeurs respectives des première et deuxième vitesses ($v_1$, $v_2$), et sur la base de celles-ci l'estimation d'un poids total ($m_{tot}$) du véhicule ferroviaire (100), **caractérisé par** :

(a) l'obtention de signaux de vitesse de roue indiquant les vitesses de rotation ($\omega_1$, $\omega_2$, $\omega_3$, $\omega_4$) respectives des essieux de roue (131, 132, 133, 134),
(b) la production d'un signal de commande de frein (B1) sur une unité de frein (101) spécifique dans l'ensemble d'unités de frein de telle sorte que cette unité de frein applique une force de freinage progressivement croissante sur un essieu de roue (131) spécifique desdits essieux de roue,
(c) la détermination, à plusieurs reprises pendant la production du signal de commande de frein (B1), d'une différence absolue ($|\omega_1 - \omega_a|$) entre la vitesse de rotation de l'essieu de roue (131) spécifique et une vitesse de rotation ($\omega_a$) moyenne desdits essieux de roue à l'exception de l'essieu de roue spécifique ; et en réponse à la différence absolue dépassant une valeur de seuil
(d) la détermination d'un paramètre ($\mu_m$) reflétant un coefficient de friction ($\mu_e$) entre une paire de roues (121a, 121b) sur l'essieu de roue (131) spécifique et une paire de rails (181, 182) sur lesquels le véhicule ferroviaire (100) circule,

la répétition des étapes (a) à (c) pour chacun desdits essieux de roue, et sur la base de celles-ci
l'estimation d'une fraction ($m_1$, $m_2$, $m_n$) respective du poids total ($m_{tot}$) porté par chacun desdits essieux de roue.

8. Procédé selon la revendication 7, comprenant :

la réception de premier et deuxième signaux de vecteur (VS1, VS2) par le biais d'au moins une interface (511, 512), lequel premier signal de vecteur (VS1) exprime une accélération ($a_x$, $a_y$, $a_z$, $a_r$, $a_p$, $a_w$) du véhicule ferroviaire (100) dans au moins une dimension, lequel deuxième signal de vecteur (VS2) exprime un mouvement de rotation respectif des roues (121a, 121b ; 122a, 122b ; 123a, 123b ; 124a, 124b) sur chaque essieu de roue desdits essieux de roue (131, 132, 133, 134), lequel mouvement de rotation est réalisé dans un plan orthogonal à un axe de rotation respectif de l'essieu de roue, et l'obtention des signaux de vitesse de roue indiquant les vitesses de rotation ($\omega_1$, $\omega_2$, $\omega_3$, $\omega_4$) respectives sur la base des premier et deuxième signaux de vecteur (VS1, VS2).

9. Procédé selon la revendication 8, dans lequel le premier signal de vecteur (VS1) exprime en outre un angle d'inclinaison ($\alpha$) du véhicule ferroviaire (100) par rapport à un plan horizontal (H), et le procédé comprend :
le réglage d'au moins un du signal de puissance ($P_m$) indiquant la quantité de puissance produite par le moteur à bord et du signal de vitesse indiquant la deuxième vitesse ($v_2$) sur la base de l'angle d'inclinaison ($\alpha$) lors de l'estimation du poids total ($m_{tot}$) du véhicule ferroviaire (100).

10. Procédé selon l'une quelconque des revendications 7 à 9, comprenant en outre :
la fourniture des fractions ($m_1$, $m_2$, $m_n$) respectives du poids total ($m_{tot}$) à un dispositif de commande de freinage pour activer le dispositif de commande de freinage pour produire un signal de force de freinage (BF1) respectif à chaque unité de frein (101) dans l'ensemble d'unités de frein (101, 102, 103, 104), lequel signal de force de freinage (BF1) respectif est basé sur les fractions ($m_1$, $m_2$, $m_n$) respectives du poids total ($m_{tot}$).

11. Procédé selon l'une quelconque des revendications 7 à 10, comprenant :
la transmission du signal de commande de frein (B1, B2, B3, B4) par le biais d'un bus de données (150) dans le véhicule ferroviaire (100).

12. Programme informatique (525) pouvant être chargé dans un support de données non volatiles (520) connecté de manière communicative à au moins un processeur (530), le programme informatique (525) comprenant un logiciel pour exécuter le procédé selon l'une quelconque des revendications 7 à 11 lorsque le programme informatique (525) est exécuté sur l'au moins un processeur (530).

13. Support de données non volatiles (520) contenant le programme informatique (425) de la revendication 12.

**Fig. 1**

EP 4 303 088 B1

**Fig. 2**

**Fig. 3**

**Fig. 4**

**Fig. 5**

START

Obtain power and speed signals during acceleration and determine overall weight of the rail vehicle — 605

610 — Obtain speed signal of a specific axle

Obtain average of the speed signals of all wheel axles except the specific wheel axle — 615

Increase brake force on the specific wheel axle

620 —

Abs. diff. above threshold? — 625 — No

Yes ↓

Determine friction coefficient — 630

All wheel axles tested? — 635 — Yes → END

↓ No

Select a not yet tested wheel axle to test — 640

645 — Obtain speed signal of selected axle

Obtain average of the speed signals of all wheel axles except the selected wheel axle — 650

Increase brake force on selected wheel axle

655 —

Abs. diff. above threshold? — 660 — No

Yes ↓

Determine weight fraction on the selected wheel axle — 665

Fig. 6

**EP 4 303 088 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9358846 B
- US 9500514 B
- US 9211879 B
- US 4896090 A